# EUROPEAN PATENT APPLICATION

(11) **EP 1 712 939 A1**
(43) Date of publication of application: **18.10.2006**
(21) Application number: 06110253.9
(22) Date of filing: 22.02.2006
(51) Int. Cl.: G02B 6/42, G02B 6/00

(54) **Light emitting diode lighting assembly particularly for optical fibres**

(30) Priority: 12.04.2005 IT TO20050242
(71) Applicant: ILTI LUCE S.r.l., 10154 Torino (IT)
(72) Inventor: Spaccasassi, Claudio, 10043, Orbassano (IT); Albano, Carlo, 10100, Torino (IT)
(74) Representative: Jorio, Paolo

(57) **Abstract**

A lighting assembly (1), particularly for optical fibres (3), wherein an output light beam is obtained using a plurality of light emitting diodes (26) and a set of lenses (31) adapted to form respective light beams, whose optical axes (26a) are addressed by orientation means (32) in a single point (P) of convergence arranged on the optical axis of the output light beam.

## Description

The present invention relates to a light emitting diode assembly, particularly for optical fibres.

In the field of lighting in general, and in the field of optical fibre lighting in particular, to which explicit reference will be made in the description that follows without for this losing in generality, it is known to use various types of lights, which are diversified mainly according to the type of light source used. Specifically, it is known to use halogen or incandescent or yet still metallic iodide lamps as light source, which are capable of generating a high intensity light beam and therefore allowing to send a light signal very far. The aforesaid lamps however present some drawbacks. Firstly, they have a limited life, present high manufacturing costs, as well as use costs, but above all are sources of heat which must be dissipated requiring complex and costly cooling systems. Moreover, the aforesaid light sources being powered at low voltage (here and hereinafter low voltage means voltages higher than fifty Volts up to three-hundred-and-eighty Volts), specific hermetic devices are indispensable for meeting the requirements in terms of safety of the light when submerged in liquid or working in open air.

Alternatively to the aforesaid sources, it is known to use light emitting diodes, commonly known as LEDs. LEDs are powered at very low voltage (here and hereinafter very low voltage means voltages lower than fifty Volts) which therefore allow to solve some of the drawbacks described above, but present further drawbacks of emitting a light beam which presents a light intensity which is much lower than that of the low voltage powered lights. Therefore, with respect to the latter, the known LEDs do not allow to reach the same light transferring distances and to obtain the same lighting effect. Not only, but when used for lighting optical fibre beams, the maximum dimension of the beam is determined by the LED itself, indeed beyond a certain diameter, the lighting is not homogenous as peripheral shadow zones are created.

The low intensity of the beams generated by the LEDs then makes the generating of coloured light beams particularly difficult being, as known, normally obtained by using coloured filtered or dedicated colour wheels which by nature further reduce the intensity of the incident light beams. For these reasons, the LED sources find modest application in the field of optical fibre lighting.

It is the object of the present invention to achieve a light emitting diode lighting assembly which allows to solve the problems set forth above and, above all, is simple and cost-effective to manufacture, with high and constant functional efficiency and reliability.

According to the present invention, it is made a light emitting diode lighting assembly, particularly for optical fibres, comprising emitting means adapted to generate an output light beam having an optical axis, said emitting means comprising light emission diodes, and forming means for forming, for each said diode, a respective light beam presenting an optical axis; orientation means being provided to direct the optical axes of said light beams to a single point of convergence arranged on the optical axis of said output light beam.

The invention will now be described with reference to the accompanying figures illustrating some non-limitative embodiment examples thereof, in which:
figure 1 shows in section and with parts removed for clarity a first preferred embodiment of the lighting assembly according to the present invention made according to the dictates of the present invention;
figure 2 is a section according to line II-II of figure 1 with parts removed for clarity;
figure 3 shows in section a second preferred embodiment of the lighting assembly according to the present invention; and
figure 4 is a perspective view of a detail of figure 3.

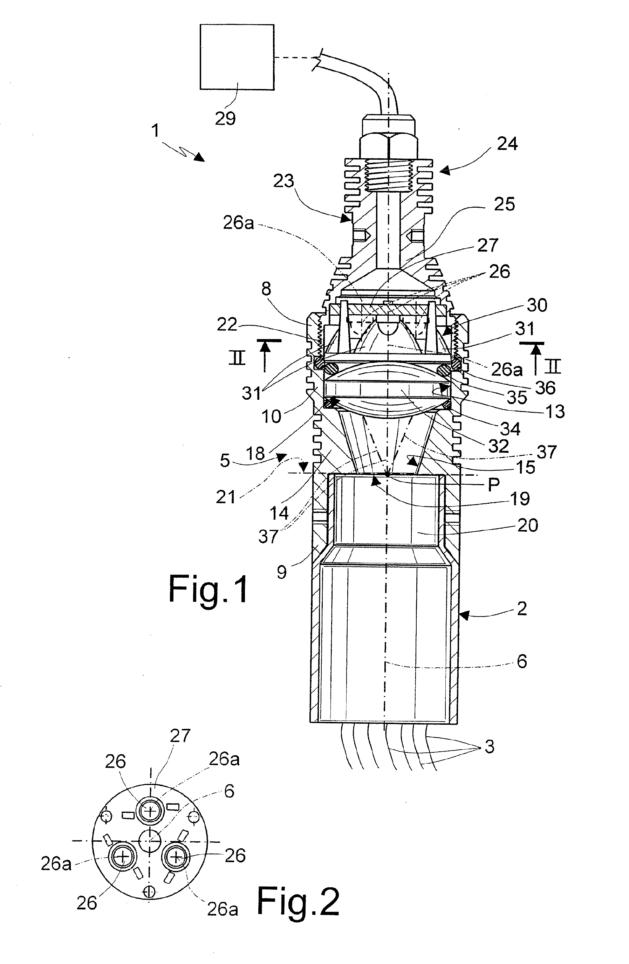

In figure 1, it is indicated by 1 a light diode lighting assembly for lighting a beam 2 of optical fibres 3.

The lighting assembly 1 comprises a tubular cylindrical body 5 presenting an axis 6 and comprising two reciprocally facing collars 8 and 9 on axial ends. The body 5 further comprises a first intermediate segment 10 extending from collar 8 and defining a cylindrical seat 13 coaxial to axis 6, and a second intermediate segment 14 delimiting an internal tapered seat 15, which extends coaxially to axis 6 between collar 9 and cylindrical seat 13, and which is flared towards the cylindrical seat 13 itself. The tapered seat 15 is joined to the cylindrical seat 13 and to collar 9 by respective axial shoulders, indicated by 18 and 19.

In collar 9 is inserted a free terminal portion 20 of the beam 2, whose axis of symmetry coincides with axis 6 and whose optical fibres 3 end on a lying plane 21 orthogonal to axis 6 and in a zone of said plane coinciding with the smaller base of the tapered seat 15.

In collar 8, instead, is fastened a threaded attachment segment 22 of an external casing 23 of a lighting unit, indicated as a whole by 24. In addition to the threaded segment 22, the external casing 23 comprises an externally finned cantilevered tubular portion 25 which protrudes from the collar 8 coaxially to axis 6, and accommodates three light emitting diodes 26, commonly known as LEDs. In the particular example described, the LEDs 26 are protrudingly carried by a supporting plate or base 27 in reciprocally parallel positions angularly and equally spaced about axis 6 (fig. 2). LEDs 26 may present the same colouring or reciprocally different colouring. According to a preferred embodiment, one of LEDs 26 is red, one blue and one green. In this case, LEDs 26 are controlled by an electronic control unit 29 dedicated to controlling, in intrinsically known way, adapted to control, in known way, the light beams emitted by the LEDs and to allow to obtain an output light beam having any colour/hue.

Again with reference to figure 1, facing LEDs 26 is arranged a monolith lens body 30, which comprises for each LED 26, a respective forming lens 31 of a respective light beam directed along a respective optical axis 26a parallel to axis 6. Between the monolith body 30 and the shoulder 18 is arranged a bi-convex lens 32 adapted to deviate the axes 26a of the light beams so as to make them converge towards each other and to make them intersect with axis 6 in a sole convergence point indicated by P. Point P essentially lays on plane 21.

Again with reference to figure 1, the lighting assembly 1 further comprises a fluid-tight device 33 comprising three annular seals, indicated by 34, 35 and 36, arranged respectively between shoulder 18 and lens 32, between lens 32 and monolith body 30 and between collar 22 and intermediate segment 10.

In use, regardless of the colour of the LEDs 26, the lens 31 form respective light beams presenting optical axes 26a parallel to each other and to axis 6. The mentioned light beams strike the lens 32 and are deviated by the lens 26 itself generating corresponding light beams, whose optical axes 37 (figure 1) converge towards each other and towards the plane 21 and intersect with each other and with axis 6 in point P. The intersection of the three light beams in point P generates a homogenous, high light intensity lighting beam. In the particular case, the intensity of the output lighting beam on the plane 21 is variable from 22000 to 25000 Lux. The output light beam directly strikes the ends of the optical fibres 3 and presents an optical axis coinciding with axis 6. The reflecting surface 15 which reflects the light rays incident on it towards axis 6 and towards plane 21 also contributes to conferring the mentioned light intensity.

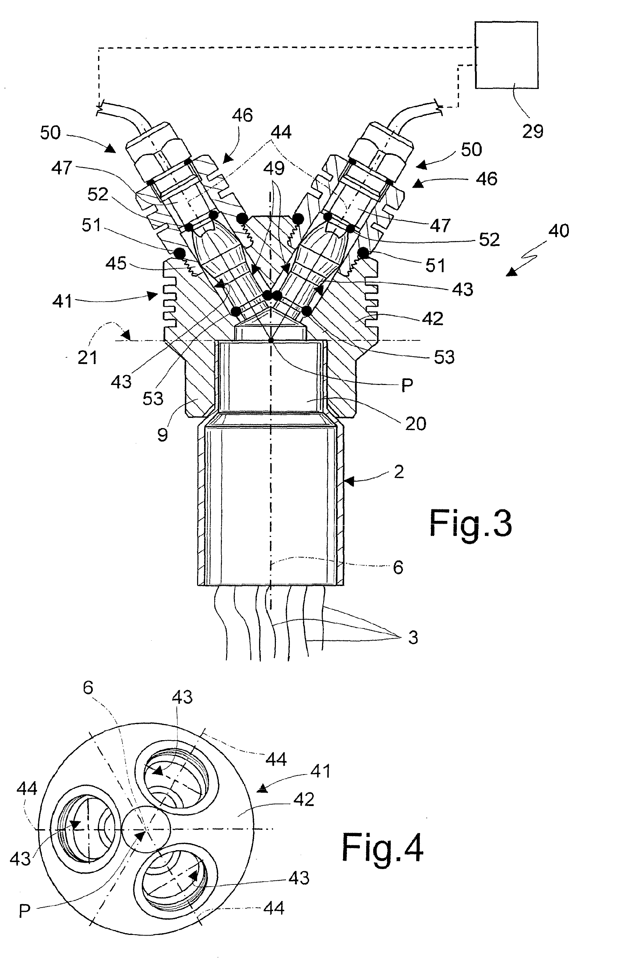

Figure 3 shows a light emitting diode assembly 40 again for optical fibre lighting, which is conceptually similar to assembly 1, differs from assembly 1 for some manufacturing details and whose component parts are identified, when possible, by the same reference numbers of the corresponding parts of assembly 1.

Specifically, in the lighting assembly 40, the collar 9 housing the terminal segment 20 of the optical beam 2 forms part of a supporting body 41, which extends again coaxially to axis 6 and differs from body 5 in that it comprises a terminal supporting segment 42 of the LEDs and orientation of the generated beams, as will be better described below.

As shown, in particular, in figure 4, the terminal portion 42 of the body 41 presents three through positioning and retaining seats 43, which are angularly and equally spaced about axis 6, converge one towards the other and towards axis 6 itself and each communicates with the inside of the collar 9. Specifically, each seat 43 coaxially extends to a respective inclined axis 44, intersecting the other axes 44 and axis 6 in point P, which also in this case essentially lays on plane 21. Each seat 43 presents an internally threaded end terminal, in which a terminal threaded portion 45 of a capping body 46 supporting a respective LED 47 is fastened. In seats 43 facing the respective LED 46 are arranged respective forming and guiding lens 49, which are adapted to form respective light beams having optical axes coinciding with the respective axes 44 and constituting, along with the respective bodies 46, the diodes 47 and the lens 49, part of an emitting unit 50 distinguished and independent from the other emitting units 50.

Again with reference to figure 3, assembly 40 also comprises a sealing device, in turn, comprising a first sealing ring 51 secured between the portion 42 and each capping body 46, a second sealing ring 52 arranged between each lens 49 and a respective capping body 46, and a third sealing ring 53 clamped between each lens 49 and portion 42.

Also in assembly 40, the light beam emitted by each LED 47 is modified after crossing the respective lens 49 so as to obtain a respective essentially cylindrical light beam having an optical axis coinciding with axis 44 and therefore intersecting the other optical axes and axis 6 generating an output light beam having its optical axis coinciding also in this embodiment with axis 6.

In both the described light assemblies 1 and 40, the convergence of light beams emitted by LEDs 26 and 47 into a single point of the axis of the optical fibre beam 2 allows to generate an output light beam having particularly high light intensity and, in particular, comparable with that generated by the traditional light sources powered at low voltage, and therefore much higher than that of the single LEDs. The manufacturing features of the described assemblies 1 and 40 allow therefore to illuminate environments or elements/objects arranged at particularly high distances using fibre bundles of any cross-section. Indeed, the homogeneousness of the light beam and the high lighting power available around convergence point P avoid the formation of peripheral shadow areas on the frontal surface of the beam 2. In other words, the degree of illumination of the optical fibres in the beam is independent from the position of the optical fibres about the axis 6.

Again the convergence of the optical axes of the beams into a single point of convergence thus allows to use appropriately coloured LEDs in three fundamental colours to obtain a light beam of any colour/hue, i.e. any colour of the solar spectrum while maintaining high intensity of the output light beam.

With respect to traditional lights provided with low voltage powered sources, the described lights 1 and 40, for the fact that they use common LEDs, present a considerably higher life, up to one-hundred-thousand hours, and contained thermal emissions, whereby dedicated air or circulating liquid cooling devices can be avoided. Furthermore, with respect to the known solutions, the described assemblies 1 and 40, indeed for the fact of being powered at very low voltage, preferably at voltages from 3.2 to 4 Volts, do not require specific sealing devices, to the extent that hermetic sealing is obtained with common elastomeric ring seals, and can therefore be used in any environment, including environments either humid or exposed to the weather elements.

Being extremely simple from a constructive point of view and using traditional components commonly available on the market, the described assemblies 1 and 40 finally present reduced manufacturing and particularly functional costs.

Finally, from the above, it is apparent that changes and variations can be applied to lighting assemblies 1 and 40 without departing from the scope of protection of the present invention. In particular, the supporting devices of the LEDs may be different, as the lens provided for modelling the emitted LED beams, and those envisaged for orienting the beams of the optical axes themselves towards the single point of convergence. Again to make the light beams converge in the same point, at least part of the aforesaid lenses may be replaced with other reflecting and/or refracting devices adapted to allow the displacement of the light along courses different from those shown and/or a different relative arrangement of the LEDs. Finally, point P may be arranged near plane 21 but not rest on plane 21 itself.

From the above it is finally apparent that the described lighting assemblies 1 and 40 may find different applications from those of optical fibre lighting and, in particular, may be used as common lighting devices.

## Claims

1. A light emitting diode lighting assembly (1;40), particularly for optical fibres (3), comprising emitting means (26;47) adapted to generate an output light beam having an optical axis (6), said emitting means comprising light emission diodes (26;47), and forming means (31;49) for forming, for each said diode, a respective light beam presenting an optical axis (26a;44); orientation means (32;42) being provided to direct the optical axes of said light beams to a single point of convergence (P) arranged on the optical axis of said output light beam.

2. Assembly according to claim 1, **characterised in that** said single point of convergence (P) is arranged between said light emitting diodes (26;47) and a plane surface (21) orthogonal to the optical axis (6) of said output light beam and being a lying plane of said frontal end surfaces of said optical fibres (3).

3. An assembly according to claim 2, **characterised in that** said single convergence point (P) lays on said plane surface (21).

4. An assembly according to one of the claims from 1 to 3, **characterised in that** said forming means comprise, for each said light emitting diode (26;47), respective light deviating means (31;49) independent from the deviating means of the other light emitting diodes.

5. An assembly according to claim 4, **characterised in that** each said diode (47) and respective said light deviating means (49) constitute part of an emitting unit (50) distinguished from other emitting units, and **in that** said orientation means comprise a positioning body (42) of said emitting units (50).

6. An assembly according to claim 5, **characterised in that** said positioning body comprises three angularly and equally distanced seats (43) each at least partially housing a respective said emitting unit (50).

7. An assembly according to claim 5 or 6,
**characterised in that** said positioning body comprises a further seat coaxial with the optical axis of said output light beam; said further seat housing a terminal portion (20) of said optical fibres (3).

8. An assembly according to one of the claims from 1 to 3, **characterised in that** said light emitting diodes (26) are arranged on a supporting element (27) reciprocally side by side; said forming means comprising for each said light emitting diode a respective first lens (31) and said orientation means comprising at least a second convergence lens (32).

9. An assembly according to claim 8, **characterised in that** said second lens (32) is in common to all said light emitting diodes and is arranged along the optical axis (6) of said output beam.

10. An assembly according to claim 8 or 9,
**characterised in that** it further comprises a reflecting surface (15) arranged downstream of said second convergence lens (32) in the direction of advancement of the light beams.

11. An assembly according to claim 10,
**characterised in that** said reflecting surface is a conical surface flared towards said light emitting diodes.

12. An assembly according to one of the claims from 8 to 11, **characterised in that** said first lenses (31) form part of a single body (30) made in one piece.

13. An assembly according to any of the preceding claims, **characterised in that** it comprises at least one red diode, at least one blue diode and at least one green diode, and a control unit (29) of said light emitting diodes to make an output light beam having any colour/hue.
